(19) Europäisches Patentamt
European Patent Office
Office européen des brevets

(11) **EP 1 504 521 B1**

(12) **EUROPÄISCHE PATENTSCHRIFT**

(45) Veröffentlichungstag und Bekanntmachung des Hinweises auf die Patenterteilung:
**28.02.2007 Patentblatt 2007/09**

(21) Anmeldenummer: 03730005.0

(22) Anmeldetag: **10.05.2003**

(51) Int Cl.:
*H02P 9/04* *(2006.01)*      *F02D 41/34* *(2006.01)*

(86) Internationale Anmeldenummer:
**PCT/EP2003/004895**

(87) Internationale Veröffentlichungsnummer:
**WO 2003/098793 (27.11.2003 Gazette 2003/48)**

(54) **VERFAHREN ZUR REGELUNG EINER BRENNKRAFTMASCHINEN-GENERATOR-EINHEIT**

METHOD FOR CONTROLLING A GENERATOR/INTERNAL COMBUSTION ENGINE UNIT

PROCEDE DE REGULATION D'UNE UNITE GENERATEUR/MOTEUR A COMBUSTION INTERNE

(84) Benannte Vertragsstaaten:
**BE DE FR GB NL**

(30) Priorität: **16.05.2002 DE 10221681**

(43) Veröffentlichungstag der Anmeldung:
**09.02.2005 Patentblatt 2005/06**

(73) Patentinhaber: **MTU FRIEDRICHSHAFEN GMBH**
**88040 Friedrichshafen (DE)**

(72) Erfinder: **DÖLKER, Armin**
**88090 Immenstaad (DE)**

(56) Entgegenhaltungen:
EP-A- 0 239 806        US-A- 4 211 931
US-A- 4 377 780        US-A- 4 454 428
US-A- 4 851 757

**Beschreibung**

Die Erfindung betrifft ein Verfahren zur Regelung einer Brennkraftmaschinen-Generator-Einheit nach dem Oberbegriff von Anspruch 1.

Eine als Generatorantrieb vorgesehene Brennkraftmaschine wird vom Hersteller üblicherweise an den Endkunden ohne Kupplung und Generator ausgeliefert. Die Kupplung und der Generator werden erst beim Endkunden montiert. Um eine konstante Nennfrequenz zur Strom-Einspeisung in das Netz zu gewährleisten, wird die Brennkraftmaschine in einem Drehzahl-Regelkreis betrieben. Hierbei wird die Drehzahl der Kurbelwelle als Regelgröße erfasst und mit einer Soll-Drehzahl, der Führungsgröße, verglichen. Die daraus resultierende Regelabweichung wird über einen Drehzahl-Regler in eine Stellgröße für die Brennkraftmaschine, beispielsweise eine Soll-Einspritzmenge, gewandelt.

Da dem Hersteller vor Auslieferung der Brennkraftmaschine oft keine gesicherten Daten über die Kupplungseigenschaften und das Generator-Trägheitsmoment vorliegen, wird das elektronische Steuergerät mit einem robusten Regler-Parametersatz, dem sogenannten Standardparametersatz, ausgeliefert. Bei einem Drehzahl-Regelkreis besteht ein Problem darin, dass Drehschwingungen, die der Regelgröße überlagert sind, vom Drehzahl-Regler verstärkt werden können. Besonders kritisch sind die von der Brennkraftmaschine verursachten niederfrequenten Schwingungen, beispielsweise die Drehschwingungen 0.5-ter und 1-ter Ordnung. Beim Starten der Brennkraftmaschinen-Generator-Einheit können die Amplituden der Drehschwingungen durch die Verstärkung des Drehzahl-Reglers so groß werden, dass eine Grenzdrehzahl überschritten und die Brennkraftmaschine abgestellt wird. Für die Praxis bedeutet dies, dass geschultes Personal beim Endkunden den Standardparametersatz auf die Gegebenheiten vor Ort anpassen muss. Dies ist aufwendig und kostenintensiv.

Dem Problem der Instabilität wird durch ein Drehzahl-Filter im Rückkopplungszweig des Drehzahl-Regelkreises begegnet. Aus der EP 0 059 585 B1 ist ein derartiges Drehzahl-Filter bekannt. Bei diesem werden die Zahnzeiten einer Welle über ein Arbeitsspiel der Brennkraftmaschine erfasst. Unter Arbeitsspiel sind zwei Umdrehungen der Kurbelwelle, entsprechend 720 Grad, zu verstehen. Aus diesen Zahnzeiten wird danach über arithmetische Mittelwertbildung eine gefilterte Zahnzeit berechnet. Aktualisiert wird diese nach jedem Arbeitsspiel. Diese gefilterte Zahnzeit entspricht einem Drehzahlwert, welcher sodann zur Regelung der Brennkraftmaschine verwendet wird. Problematisch bei diesem 2-Umdrehungs-Filter ist jedoch, dass ein stabiles Verhalten der Antriebsanlage mit einer Verschlechterung des Lastannahme-Verhaltens einhergeht. Ein schlechtes Lastannahme-Verhalten kann jedoch bedeuten, dass die gesetzlich geforderten Lastannahme-Kriterien unter Umständen nicht mehr erfüllt werden.

Der Erfindung liegt die Aufgabe zu Grunde eine Regelung für eine Brennkraftmaschinen-Generator-Einheit bereitzustellen, welche ein schnelles und sicheres Lastannahme-Verhalten gewährleistet.

Die Aufgabe wird durch ein Verfahren zur Regelung einer Brennkraftmaschinen-Generator-Einheit mit den Merkmalen von Anspruch 1 gelöst. Die vorteilhaften Ausgestaltungen sind in den Unteransprüchen dargestellt.

Die Erfindung sieht vor, dass die gefilterte Drehzahl auf Drehzahl-Schwingungen überwacht wird und bei festgestellter Drehzahl-Schwingung diese eliminiert wird, indem deren Frequenz mit einem ersten Grenzwert verglichen wird. In Abhängigkeit des Vergleichs wird ein erster oder zweiter Modus gesetzt. Im ersten Modus wird das Filter umgeschaltet und im zweiten Modus werden Kenngrößen des Drehzahl-Reglers adaptiert. Hierbei wird bei einer Frequenz größer als der erste Grenzwert der erste Modus gesetzt und bei einer Frequenz kleiner dem ersten Grenzwert der zweite Modus gesetzt.

Die Erfindung basiert auf der Erkenntnis, dass die Eigenfrequenz einer derartigen Brennkraftmaschinen-Generator-Einheit typischerweise in einem Bereich von 10 bis 25 Hz liegt.

Mit Setzen des ersten Modus wird das Filter umgeschaltet indem für die Filterung der Ist-Drehzahl ein neuer Kurbelwellenwinkel verwendet wird. Hierbei wird der neue Kurbelwellenwinkel mittels einer Kennlinie in Abhängigkeit der herauszufilternden Frequenz bestimmt. Beispielsweise wird eine 25 Hz-Schwingung herausgefiltert, wenn das Filter die Ist-Drehzahl über eine Kurbelwellenumdrehung von 360 Grad mittelt. Eine weitere Maßnahme besteht darin, dass der P-Anteil und/oder D-Anteil des Drehzahl-Reglers reduziert wird. Hierzu wird ein Proportionalbeiwert und/oder eine Vorhaltzeit reduziert.

Mit Setzen des zweiten Modus wird die Frequenz mit einem zweiten Grenzwert verglichen. Bei einer Frequenz kleiner dem zweiten Grenzwert werden als Kenngrößen des Drehzahl-Reglers ein P-Anteil und ein I-Anteil adaptiert. Der zweite Grenzwert besitzt beispielsweise einen Wert von 7 Hz. Die Adaption erfolgt in der Form, dass nach jeder Werteänderung erneut geprüft wird, ob noch Drehzahl-Schwingungen vorliegen.

Die Erfindung und deren Ausgestaltungen ermöglichen es, dass der Standardparametersatz des Drehzahl-Reglers für eine drehstarre Brennkraftmaschinen-Generator-Einheit, d. h. für eine Anlage ohne Kupplung, ausgelegt wird. Drehstarre Systeme sind für die Auslegung des Drehzahl-Reglers ideale Systeme, da hierbei ein schneller Drehzahl-Regler - großer Proportionalbeiwert, große Vorhaltzeit - verwendet werden kann. Hierdurch wird ein schnelles Lastannahme-Verhalten garantiert. Durch die Einführung des ersten Grenzwerts, beispielsweise 10 Hz kann ein Schwingungsproblem identifiziert werden. Bei einer Frequenz größer als dem ersten Grenzwert ist der Verursacher die Kupplung. Bei einer Frequenz kleiner als dem ersten Grenzwert ist ein sehr großes Generator-Trägheitsmoment die Ursache. Durch die Umschaltung des Drehzahl-Filters oder die Adaption von Kenngrößen des Drehzahl-Reglers wird der Vorteil erzielt, dass die Anlage sich selber stabilisiert. Die Dynamik der Anlage wird hierbei nur soviel wie nötig reduziert, damit die Brennkraftmaschinen-Generator-Einheit zuverlässig läuft. Da der Standardparametersatz automatisch angepasst wird, ist der Endkunde freier in der Wahl der Kupplungen. Eine zusätzliche Abstimmung vor Ort entfällt, wodurch die Kundendienstkosten reduziert werden. Ein weiterer Vorteil besteht darin, dass die Anzahl der Standardparametersätze geringer ausfällt, da keine kupplungs- bzw. generatorspezifischen Datensätze kreiert werden müssen.

Im den Zeichnungen ist ein bevorzugtes Ausführungsbeispiel dargestellt. Es zeigen:

Figur 1 ein Blockschaltbild des Gesamtsystems
Figur 2 ein Zeitdiagramm des Startvorgangs
Figur 3 einen Regelkreis
Figur 4 eine erste Ausgestaltung zur Umschaltung des Filters
Figur 5 eine zweite Ausgestaltung zur Umschaltung des Filters
Figur 6 ein Diagramm Kurbelwellen-Winkel über der Frequenz
Figur 7 ein Ablaufplan Hauptprogramm zur Ermittlung der Drehzahl-Schwingungen
Figur 8 einen Programmablaufplan Filterumschaltung
Figur 9 einen Programmablaufplan Filterumschaltung mit Verringerung D-Anteil
Figur 10 einen Programmablaufplan Filterumschaltung mit Verringerung P-Anteil
Figur 11 einen Programmablaufplan Filterumschaltung mit Verringerung P-Anteil und D-Anteil
Figur 12 einen Programmablaufplan Adaption Kenngrößen des Drehzahl-Reglers

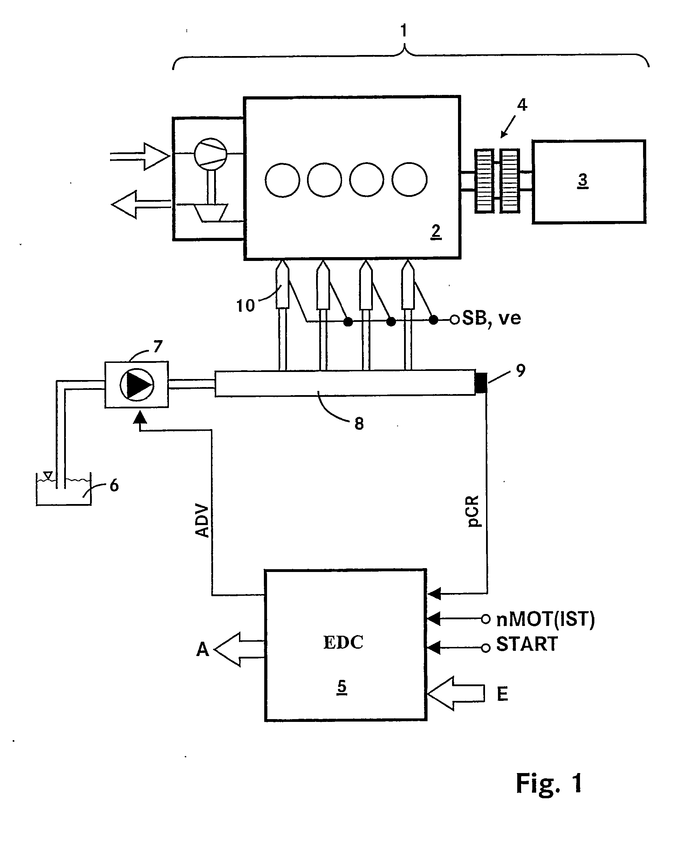

Die Figur 1 zeigt ein Blockschaltbild des Gesamtsystems einer Brennkraftmaschinen-Generator-Einheit 1, bestehend aus einer Brennkraftmaschine 2 mit einem Generator 3. Die Brennkraftmaschine 2 treibt über eine Welle und Kupplung 4 den Generator 3 an. Die dargestellte Brennkraftmaschine 2 verfügt über ein Common-Rail-Einspritzsystem. Dieses umfasst folgende Komponenten: Pumpen 7 mit Saugdrossel zur Förderung des Kraftstoffs aus einem Kraftstofftank 6, ein Rail 8 zum Speichern des Kraftstoffs und Injektoren 10 zum Einspritzen des Kraftstoffs aus dem Rail 8 in die Brennräume der Brennkraftmaschine 2.

Die Brennkraftmaschine 2 wird durch ein elektronisches Steuergerät (EDC) 5 gesteuert und geregelt. Das elektronische Steuergerät 5 beinhaltet die üblichen Bestandteile eines Mikrocomputersystems, beispielsweise einen Mikroprozessor, 1/0-Bausteine, Puffer und Speicherbausteine (EEPROM, RAM). In den Speicherbausteinen sind die für den Betrieb der Brennkraftmaschine 2 relevanten Betriebsdaten in Kennfeldern/Kennlinien appliziert. Über diese berechnet das elektronische Steuergerät 5 aus den Eingangsgrößen die Ausgangsgrößen. In Figur 1 sind exemplarisch folgende Eingangsgrößen dargestellt: ein Raildruck pCR, der mittels eines Rail-Drucksensors 9 gemessen wird, ein Ist-Drehzahl-Signal nMOT (IST) der Brennkraftmaschine 2, eine Eingangsgröße E und ein Signal START zur Aktivierung der Brennkraftmaschinen-Generator-Einheit 1. Unter der Eingangsgröße E sind beispielsweise der Ladeluftdruck eines Turboladers und die Temperaturen der Kühl-/Schmiermittel und des Kraftstoffs subsumiert.

In Figur 1 sind als Ausgangsgrößen des elektronischen Steuergeräts 5 ein Signal ADV zur Steuerung der Pumpen 7 mit Saugdrossel und eine Ausgangsgröße A dargestellt. Die Ausgangsgröße A steht stellvertretend für die weiteren Stellsignale zur Steuerung und Regelung der Brennkraftmaschine 2, beispielsweise den Einspritzbeginn SB und eine Soll-Einspritzmenge ve.

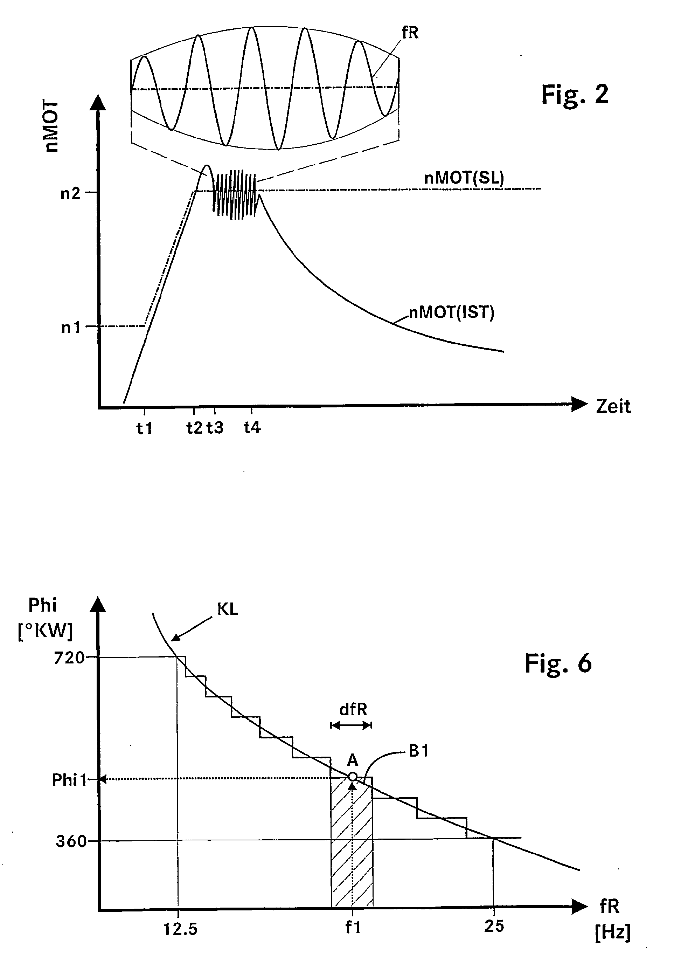

Figur 2 zeigt ein Drehzahl-Zeit-Diagramm für einen Startvorgang einer Brennkraftmaschinen-Generator-Einheit 1. Als strichpunktierte Linie ist die Führungsgröße für die Drehzahl-Regelung, entsprechend der Soll-Drehzahl nMOT(SL), dargestellt. Als durchgezogene Linie ist die Ist-Drehzahl nMOT(IST) eingezeichnet. Zum Zeitpunkt t1 wird die Führungsgröße von einem Anfangswert n1 bis zum Zeitpunkt t2 auf den Wert n2 rampenförmig erhöht. Vom Zeitpunkt t2 an bleibt die Führungsgröße unverändert. Die Ist-Drehzahl nMOT(IST) folgt zunächst dieser Führungsgröße. Zum Zeitpunkt t2 überschreitet die Ist-Drehzahl nMOT(IST) den Vorgabewert n2. Während des Zeitraums t3 bis t4 beginnt die Ist-Drehzahl nMOT(IST) der Brennkraftmaschine zu schwingen. Die Ursachen für diese Drehzahl-Schwingungen können sein: eine unzulässig hohe Streuung der Injektoren, der Ausfall zumindest eines Injektors und/oder eine fehlerhafte Auslegung der Kupplung. Eine derartige Drehzahl-Schwingung ist in Figur 2 als Ausschnitt mit einer Frequenz fR dargestellt. In der Praxis werden die Amplituden bei einer Brennkraftmaschine mit Betriebstemperatur zum Teil so groß, dass eine Drehzahlgrenze überschritten wird und ein Not-Stop ausgelöst wird. Hieraus resultiert der Ist-Drehzahl-Verlauf ab dem Zeitpunkt t4.

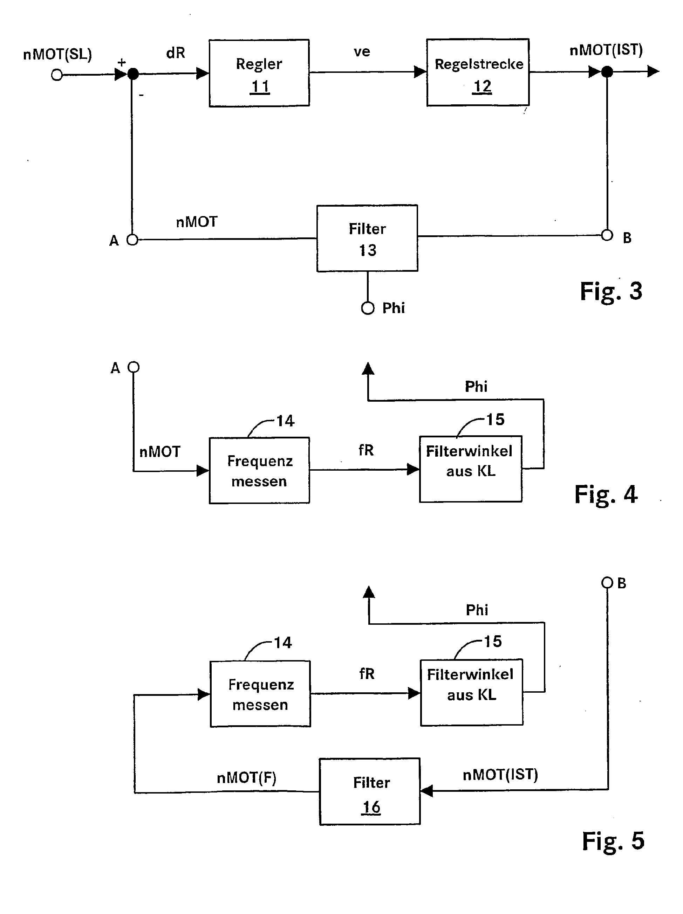

Figur 3 zeigt einen Regelkreis zur Drehzahl-Regelung einer Brennkraftmaschine. Dieser besteht aus einem Drehzahl-Regler 11, einer Regelstrecke 12 und einem Filter 13. Die Eingangsgröße des Regelkreises ist eine Soll-Drehzahl nMOT(SL). Die Ausgangsgröße entspricht der Ist-Drehzahl nMOT(IST). Aus der Ist-Drehzahl nMOT(IST) wird mittels des Filters 13 eine gefilterte Drehzahl nMOT erzeugt. Aus der gefilterten Drehzahl nMOT und der Führungsgröße nMOT(SL) wird eine Regelabweichung dR bestimmt. In Abhängigkeit der Regelabweichung dR berechnet der Drehzahl-Regler 11 die Stellgröße, entsprechend der Soll-Einspritzmenge ve. Diese wird auf die Regelstrecke 12 geführt. Das Einspritzsystem und die Brennkraftmaschine entsprechen hierbei der Regelstrecke 12. Damit ist der Regelkreis geschlossen.

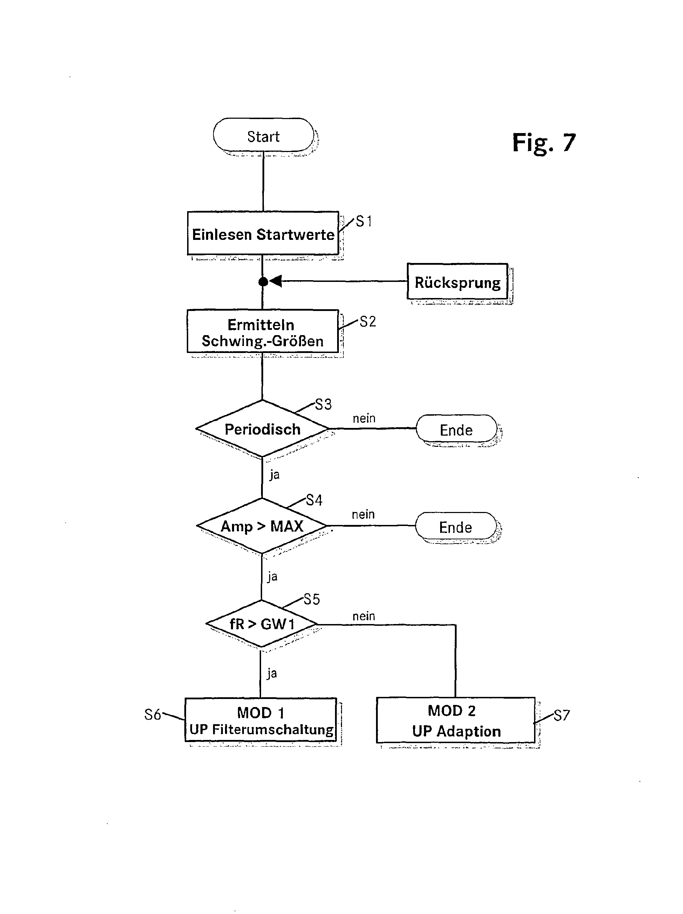

Üblicherweise besteht der Drehzahl-Regler 11 aus einem P-, I- und D-Anteil. Der Drehzahl-Regler 11 wird vom Hersteller der Brennkraftmaschine mit dem Standardparametersatz ausgeliefert. Der Standardparametersatz ist für eine drehstarre Anlage, d. h. ohne Kupplung, konfiguriert. Eine derartige Anlage kann mit einem sehr schnellen Drehzahl-Regler 11 betrieben werden. Ein schneller Drehzahl-Regler 11 besitzt einen großen Proportionalbeiwert und einen großen D-Anteil. Drehstarre Systeme sind für die Auslegung des Drehzahl-Reglers 11 ein ideales System. Wird an die Brennkraftmaschine 2 eine weiche Kupplung 4 (kleine Federsteifigkeit) und/oder ein Generator mit großem Trägheitsmoment angebaut, so kann die Anlage instabil werden. Dies äußert sich wie zuvor beschrieben in periodischen Schwingungen auf der Ist-Drehzahl nMOT(IST) und der gefilterten Drehzahl nMOT. Die Frequenz dieser Schwingung gibt hierbei Auskunft über die Ursache der Instabilität. Bei einer Frequenz fR größer einem ersten Grenzwert, beispielsweise 10 Hz, schwingt die Brennkraftmaschinen-Generator-Einheit im allgemeinen mit der Frequenz der Anlage, verursacht durch die Kupplung 4. Bei einer Frequenz fR kleiner dem ersten Grenzwert wird die Instabilität zum Beispiel durch ein großes Generator-Trägheitsmoment verursacht. Gemäß der Figur 4 in Verbindung mit der Figur 3 sieht die Erfindung nun vor, dass aus der gefilterten Drehzahl nMOT mittels eines Funktionsblocks 14 (Abzweig A) die Frequenz fR der Drehzahl-Schwingungen ermittelt wird. Danach wird in Abhängigkeit der Frequenz fR über einen Funktionsblock 15 anhand einer Kennlinie ein neuer Kurbelwellen-Winkel Phi zur Filterung der Ist-Drehzahl nMOT(IST) berechnet. Die Kennlinie ist in Figur 6 für ein Mittelwert-Filter dargestellt und wird in Verbindung mit dieser erläutert. Anstelle eines Mittelwert-Filters kann auch ein Filter gemäß der Patentanmeldung mit dem Aktenzeichen DE 101 22 517.2 verwendet werden. Der neue Kurbelwellen-Winkel Phi stellt eine Eingangsgröße des Filters 13 dar. Mit anderen Worten: Das Drehzahl-Filter 13 wird vom ursprünglichen Kurbelwellen-Winkel, beispielsweise 90 Grad, auf einen neuen Wert Phi umgeschaltet. Durch diese Maßnahme wird die Frequenz fR der Drehzahl-Schwingungen ausgeblendet.

Die Figur 5 zeigt eine Variante der Figur 4. Bei dieser wird die Ist-Drehzahl nMOT(IST) erfasst (Abzweig B) und über ein weiteres Filter 16 in eine Drehzahl nMOT (F) gewandelt. Aus dieser wird entsprechend der Beschreibung der Figur 4 sodann der neue Kurbelwellen-Winkel Phi für das Filter 13 berechnet.

In Figur 6 ist ein Diagramm zur Berechnung des Kurbelwellen-Winkels Phi in Abhängigkeit der Frequenz fR dargestellt. Hierbei wurde ein Mittelwert-Filter zu Grunde gelegt. Die Frequenz fR entspricht der detektierten Frequenz der Drehzahl-Schwingung der gefilterten Drehzahl nMOT bzw. nMOT(F). Der Kurbelwellen-Winkel Phi entspricht dem Winkel über welchen die Ist-Drehzahl nMOT(IST) mittels des Filters 13 gemittelt wird. Eingezeichnet ist eine idealisierte Kennlinie KL. Über diese wird einer Frequenz ein Kurbelwellen-Winkel zugeordnet. Beispielsweise wird der Frequenz f1 über den Punkt A der Kennlinie KL ein Wert Phi1 zugeordnet. In der Praxis wird die hyperbolische Kennlinie KL in einer Treppenfunktion abgebildet. In Figur 6 ist bei dieser Treppenfunktion ein schraffierter Bereich B1 exemplarisch dargestellt. Der Bereich B1 besitzt die Breite dfR und die Höhe Phi 1. Frequenzwerten innerhalb des Bereichs dfR werden über diese Treppenfunktion stets der gleiche Wert Phi 1 zugeordnet. Der treppenförmige Verlauf der Kennlinie resultiert aus dem Umstand, dass das Messrad zur Erfassung der Ist-Drehzahl nMOT(IST) nur eine begrenzte Anzahl von Zähnen aufweist. Aus der Anzahl der Zähne resultiert der kleinstmögliche erfassbare Kurbelwellen-Winkel. Der tatsächlich erfasste Kurbelwellen-Winkel stellt insofern ein ganzzahliges Vielfaches dieses minimalen Kurbelwellen-Winkels dar. Beispielsweise ergibt sich für ein Messrad mit 120 Zähnen und bei Erfassung der Zeit zwischen 5 Zähnen ein Wert dfR von 0.66 Hz bei einer Frequenz f1 gleich 20 Hz und einer Ist-Drehzahl nMOT(IST) von 1500 Umdrehungen je Minute. Die Breite dfR der Bereiche vergrößern sich mit zunehmender Frequenz fR, da die Frequenz fR und der Kurbelwellen-Winkel Phi umgekehrt proportional zueinander sind. Die auf der Abszisse und Ordinate dargestellten Grenzwerte entsprechen typischerweise einer Generator-Anwendung mit 50 Hz Netzfrequenz.

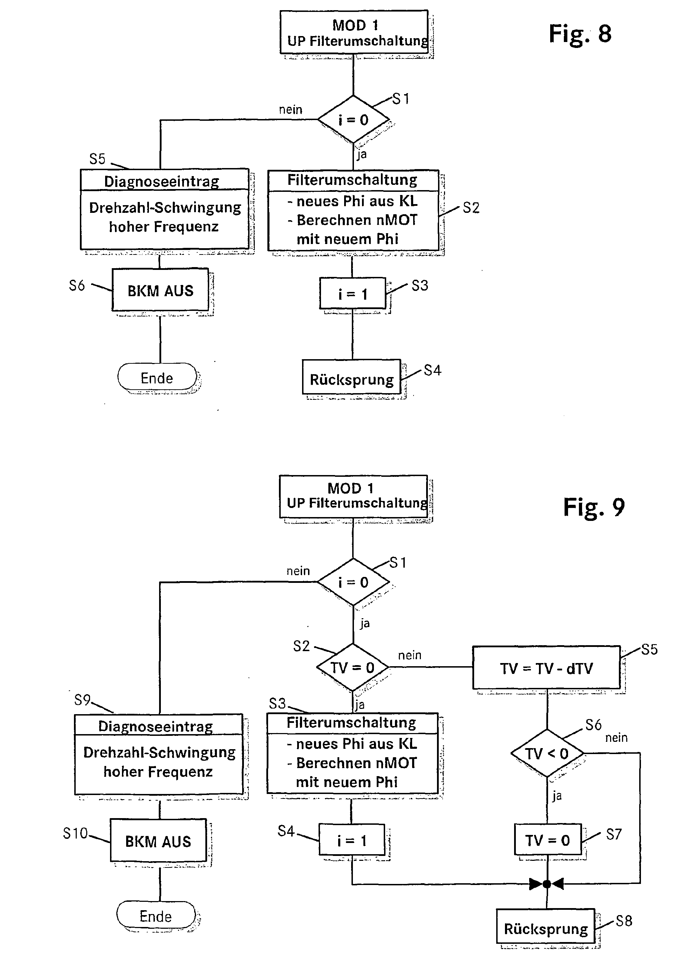

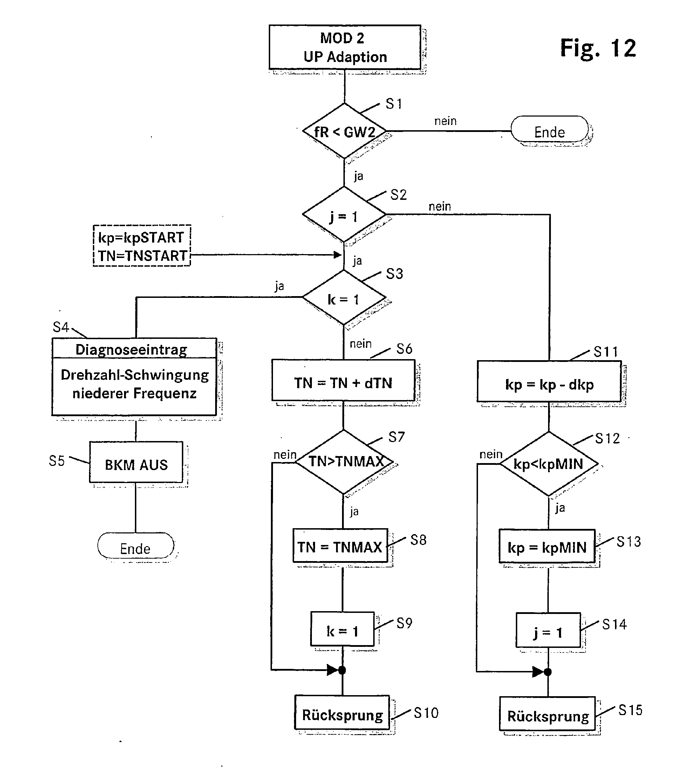

In Figur 7 ist ein Ablaufplan für ein Hauptprogramm zur Ermittlung der Frequenz der Drehzahl-Schwingungen dargestellt. Bei S1 werden die Startwerte eingelesen, beispielsweise der Kurbelwellenwinkel Phi für das Filter 13 und die Kenngrößen des Drehzahl-Reglers 11 (Proportionalbeiwert, Nachstellzeit, Vorhaltzeit). Bei S2 werden die Schwingungsgrößen (Amplitide Amp, Frequenz fR) der Drehzahl-Schwingung auf der gefilterten Drehzahl nMOT bzw. nMOT(F) ermittelt. Danach wird bei S3 geprüft, ob die detektierte Schwingung periodisch ist. Bei einer aperiodischen Schwingung ist der Programmablauf beendet. Bei S4 wird geprüft, ob die detektierte Amplitude Amp größer einem Maximalwert MAX ist. Ist dies nicht der Fall, so ist der Programmablauf beendet. Bei positivem Prüfergebnis, d. h. die Schwingung ist periodisch und die Amplitude Amp ist größer als der Maximalwert MAX, wird geprüft, ob die Frequenz fR größer einem ersten Grenzwert GW1 ist, S5. Ist dies der Fall, so wird bei S6 der erste Modus MOD1 gesetzt und das Unterprogramm Filterumschaltung aufgerufen. Dieses wird in Verbindung mit den Figuren 8 bis 11 erläutert. Wenn die Frequenz fR kleiner als der erste Grenzwert GW1 ist, so wird der zweite Modus MOD2 gesetzt und das Unterprogramm Adaption aktiviert. Dieses wird in Verbindung mit der Figur 12 erläutert. Die Rückkehr aus den beiden Unterprogrammen erfolgt über ein Label "Rücksprung".

In Figur 8 ist das Unterprogramm Filterumschaltung dargestellt. Bei S 1 wird anhand einer Variablen i geprüft, ob das Filter 13 bereits umgeschaltet ist.

Bei nicht umgeschaltetem Filter wird bei S2 ein neuer Kurbelwellen-Winkel Phi entsprechend dem Diagramm der Figur 6 bestimmt. Danach wird die gefilterte Drehzahl nMOT mit dem neuen Kurbelwellen-Winkel Phi aus der Ist-Drehzahl nMOT(IST) berechnet. Bei S3 wird die Variable i gleich Eins gesetzt und bei S4 ins Hauptprogramm zurückgekehrt. Wenn im Schritt S 1 festgestellt wird, dass der erste Modus MOD 1 bereits aktiviert ist und das Filter 13 bereits umgeschaltet wurde, so erfolgt bei S5 ein Diagnoseeintrag. Dieser dokumentiert eine Drehzahl-Schwingung von hoher Frequenz. Der Diagnoseeintrag kann dann mit den Randbedingungen aus dem elektronischen Steuergerät 5 ausgelesen werden. Zusätzlich wird eine Warnanzeige aktiviert, welche den Betreiber informiert. Danach wird bei S6 ein Notaus für die Brennkraftmaschine aktiviert. Damit ist der Programmablauf beendet.

In Figur 9 ist ein Unterprogramm Filterumschaltung mit Verringerung des D-Anteils dargestellt. Gegenüber der Figur 8 unterscheidet sich dieser Programmablaufplan durch die Hinzufügung der Schritte S2 und S5 bis S7. Die weitere Erläuterung bezieht sich auf diese Ergänzungen. Die Verringerung des D-Anteils des Drehzahl-Reglers 11 erfolgt über die Verringerung einer Vorhaltzeit TV. Bekanntermaßen ist der D-Anteil (differenzieller Anteil) folgendermaßen definiert:

$$ve(D) = (ddR/dt) \cdot TV \cdot kp$$

mit

ve(D)    D-Anteil der Soll-Einspritzmenge ve
ddR/dt    Gradient der Drehzahlregelabweichung
TV    Vorhaltzeit (s)
kp    Proportionalbeiwert $((mm^3 \cdot min)/hub)$

Bei S2 wird geprüft, ob die Vorhaltzeit TV gleich Null ist. Ist dies nicht der Fall, so wird bei S5 diese um einen Wert dTV verringert. Danach wird bei S6 geprüft, ob die Vorhaltzeit TV kleiner Null ist. Ist dies nicht der Fall, so verzweigt der Programmablauf zu S8 mit dem Rücksprung in das Hauptprogramm, entsprechend der Figur 7. Im Hauptprogramm wird dann geprüft, ob trotz des verringerten D-Anteils immer noch Drehzahl-Schwingungen auftreten. Ergibt die Prüfung bei S6, dass die Vorhaltzeit TV kleiner Null ist, so wird bei S7 diese auf Null gesetzt. Danach wird bei S8 in das Hauptprogramm verzweigt. Ergibt die Prüfung bei S2, dass die Vorhaltzeit TV bereits auf Null reduziert wurde, so erfolgt bei S3 die Filterumschaltung, bei S4 das Setzen der Variablen i und mit S8 die Rückkehr ins Hauptprogramm. Werden trotz der Reduktion der Vorhaltzeit TV und der Filterumschaltung immer noch Drehzahl-Schwingungen festgestellt, Abfrage S 1 gleich negativ, so wird bei S9 und S10 eine Diagnoseeintragung und ein Notaus entsprechend der Beschreibung der Figur 8 vorgenommen. Damit ist der Programmablauf beendet.

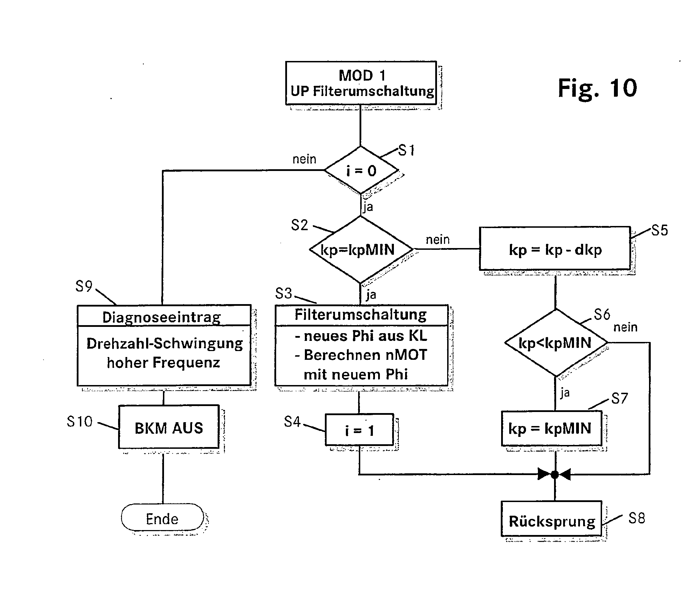

Die Figur 10 zeigt einen Programmablaufplan zum Unterprogramm Filterumschaltung mit Verringerung des P-Anteils. Dieser unterscheidet sich von der ersten Ausführung nach Figur 9 dadurch, dass hier der Proportionalbeiwert kp verringert wird. Hierzu wird bei S2 geprüft, ob der Proportionalbeiwert kp gleich einem Minimalwert kpMIN ist. Ist dies nicht der Fall, so wird bei S5 dieser um einen Wert dkp verringert. Bei S6 wird geprüft, ob der Proportionalbeiwert kp bereits kleiner als kpMIN ist. Ist dies nicht der Fall, so verzweigt der Programmablauf zu S8 mit dem Rücksprung in das Hauptprogramm, entsprechend dem Programmablaufplan der Figur 7. Wenn bei 86 festgestellt wird, dass der Proportionalbeiwert kp bereits kleiner als kpMIN ist, wird bei S7 der Proportionalbeiwert kp auf kpMIN gesetzt und mit S8 in das Hauptprogramm zurückgekehrt. Die weiteren Zweige des Programmablaufplans entsprechen dem Programmablaufplan der Figur 8, so dass das dort Gesagte gilt.

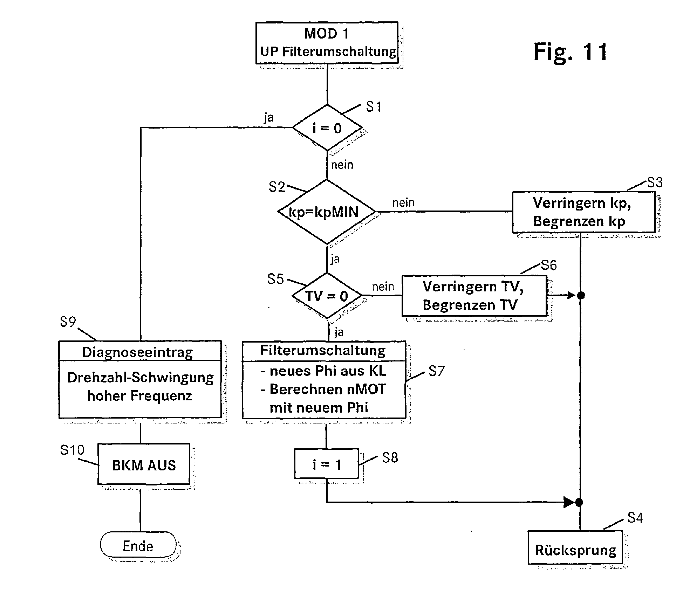

In Figur 11 ist ein Programmablaufplan des Unterprogramms Filterumschaltung mit Verringerung des P-Anteils und des D-Anteils dargestellt. Bei S1 1 wird geprüft, ob das Filter 13 bereits umgeschaltet ist. Ist dies nicht der Fall, so wird bei S2 geprüft, ob der Proportionalbeiwert kp gleich dem Minimalwert kpMIN ist. Ist dies nicht der Fall, so wird der Schritt S3 durchlaufen. Dieser enthält die Schritte S5 bis S7 der Figur 10. Mit S4 wird in das Hauptprogramm, entsprechend der Figur 7, verzweigt. Wird bei S2 festgestellt, dass kp gleich dem Minimalwert kpMIN ist, so wird bei S5 geprüft, ob die Vorhaltzeit TV gleich Null ist. Ist dies nicht der Fall, wird der Schritt S6 durchlaufen. Dieser enthält die Schritte S5 bis S7 der Figur 9. Mit S4 wird in das Hauptprogramm zurückgekehrt. Wenn bei S5 festgestellt wird, dass die Vorhaltzeit TV gleich Null ist, so wird bei S7 das Filter entsprechend der Kennlinie der Figur 6 umschalten. Bei S8 wird danach die Variable i auf Eins gesetzt und ins Hauptprogramm zurückgekehrt. Wenn bei S 1 festgestellt wird, dass alle bisherigen Maßnahmen, d. h. Verringerung des Proportionalbeiwerts kp, Verringerung der Vorhaltzeit TV und Filterumschaltung nicht zum Ziel geführt haben die Drehzahl-Schwingungen zu eliminieren, so wird bei S9 ein Diagnoseeintrag vorgenommen. Danach wird bei S10 der Notaus für die Brennkraftmaschine ausgelöst. Damit ist der Programmablauf beendet.

In Figur 12 ist ein Programmablaufplan des Unterprogramms Adaption der Kenngrößen des Drehzahl-Reglers 11 dargestellt. Dieses Unterprogramm wird im zweiten Modus MOD2 aktiviert. Über dieses Unterprogramm werden die Kenngrößen des Drehzahl-Reglers 11, entsprechend dem P- und I-Anteil, adaptiert. Bekanntermaßen gelten für den P- und I-Anteil folgende Beziehungen:

$$ve(P) = dR \cdot kp$$

mit

ve(P)     P-Anteil der Soll-Einspritzmenge ve
dR     Drehzahlregelabweichung (1/min)
kp     Proportionalbeiwert $((mm^3 \cdot min)/hub)$

bzw.

$$ve(I) = (1/TN)\ INT(dR \cdot dt)$$

mit

ve(1)     1-Anteil der Soll-Einspritzmenge ve
dR     Drehzahlregelabweichung (1/min)
INT     Integral
TN     Nachstellzeit (s)

Bei diesem Programmablaufplan wird zuerst der Proportional- und dann der IntegralAnteil verringert. Diese Vorgehensweise führt bei sehr kleinen Generatoren (kleines Trägheitsmoment) schnell zu einem stabilen Verhalten. Bei sehr großen Generatoren ist es jedoch günstiger zuerst den Integral- und dann den Proportional-Anteil zu verringern. Bei S1 wird geprüft, ob die Frequenz fR kleiner einem zweiten Grenzwert GW2 ist. Ist dies nicht der Fall, so ist der Programmablauf beendet. In der Praxis entspricht der zweite Grenzwert GW2 beispielsweise einer Frequenz von 7 Hz. Bei positiver Prüfung wird bei S2 geprüft, ob eine Variable j gleich Eins gesetzt ist. Diese Variable j wird dann gesetzt, wenn der Proportionalbeiwert kp bereits bis auf einen Grenzwert kpMIN adaptiert wurde. Ist dies nicht der Fall, so wird bei S11 dieser um einem Wert dkp verringert. Danach wird bei S12 geprüft, ob der Proportionalbeiwert kp bereits kleiner dem Grenzwert kpMIN ist. Ist dies nicht der Fall, so erfolgt bei S15 ein Rücksprung in das Hauptprogramm, entsprechend der Figur 7. Ergibt die Prüfung bei S12 dass der Proportionalbeiwert kp kleiner dem Grenzwert kpMIN ist, wird bei S13 dieser auf den Grenzwert kpMIN gesetzt und bei S14 die Variable j gleich Eins gesetzt. Danach erfolgt bei S15 der Rücksprung ins Hauptprogramm.

Wird bei der Abfrage in S2 erkannt, dass der Proportionalbeiwert kp bereits vollständig adaptiert wurde und immer noch Drehzahl-Schwingungen vorliegen, so erfolgt bei S3 die Prüfung ob eine Variable k gleich Eins gesetzt ist. Diese wird dann auf Eins gesetzt, wenn die Nachstellzeit TN des 1-Anteils bis auf einen Grenzwert TNMAX adaptiert wurde. Ist die Variable k ungleich Eins, so wird bei S6 die Nachstellzeit TN um einen Wert dTN erhöht. Danach erfolgt bei S7 die Prüfung ob diese den Grenzwert TNMAX überschreitet. Ist dies nicht der Fall, so erfolgt mit S10 der Rücksprung in das Hauptprogramm. Wird bei S7 festgestellt, dass die Nachstellzeit TN größer als der Grenzwert TNMAX ist, so wird bei S8 diese auf den Grenzwert TNMAX gesetzt und die Variable k auf Eins gesetzt. Danach wird ins Hauptprogramm verzweigt.

Wird bei S3 erkannt, dass sowohl der Proportionalbeiwert kp als auch die Nachstellzeit TN bereits adaptiert wurden, so wird bei S4 ein Diagnoseeintrag Drehzahl-Schwingung niederer Frequenz vorgenommen. Ergänzend kann bei S3 auch vorgesehen werden, dass vor dem Diagnoseeintrag der Proportionalbeiwert kp und die Nachstellzeit TN auf ihre Startwerte kpSTART/ TNSTART zurückgesetzt werden. Bei S5 wird sodann der Notaus für die Brennkraftmaschine aktiviert. Damit ist der Programmablauf beendet.

Wie aus der vorhergehenden Beschreibung hervorgeht, zeigt die Erfindung folgende Vorteile:

- die Reglerparameter werden automatisch für die jeweilige Anlage optimiert,
- größere Wahlfreiheit bei der Kupplungsauswahl,
- die Kundendienstkosten reduzieren sich und
- es sind keine anlagenspezifischen Datensätze mehr notwendig.

### Bezugszeichen

| | |
|---|---|
| 1 | Brennkraftmaschinen-Generator-Einheit |
| 2 | Brennkraftmaschine |
| 3 | Generator |
| 4 | Kupplung |
| 5 | Elektronisches Steuergerät EDC |
| 6 | Kraftstofftank |
| 7 | Pumpen |
| 8 | Rail |
| 9 | Rail-Drucksensor |
| 10 | Injektoren |
| 11 | Drehzahl-Regler |
| 12 | Regelstrecke |
| 13 | Filter |
| 14 | Funktionsblock Frequenz messen |
| 15 | Funktionsblock Filterwinkel aus Kennlinie |
| 16 | Filter |

### Patentansprüche

**1.** Verfahren zur Regelung einer Brerinkraftmaschinen-Generator-Einheit, bei der die Drehzahl der Brennkraftmaschine in einem Regelkreis geregelt wird, indem als Regelgröße die Ist-Drehzahl der Brennkraftmaschine erfasst wird, diese mittels eines Filters in eine gefilterte Drehzahl gewandelt wird und aus der gefilterten Drehzahl sowie einer Soll-Drehzahl eine Regelabweichung zur Beeinflussung eines Drehzahl-Reglers gebildet wird, **dadurch gekennzeichnet, dass** die gefilterte Drehzahl (nMOT, nMOT(F)) auf Drehzahl-Schwingungen überwacht wird und bei festgestellter Drehzahl-Schwingung diese eliminiert wird indem deren Frequenz (fR) mit einem ersten Grenzwert (GW1) verglichen wird und in Abhängigkeit des Vergleichs ein erster (MOD1) oder zweiter Modus (MOD2) gesetzt wird, wobei im ersten Modus (MOD1) das Filter (13) umgeschaltet wird und im zweiten Modus (MOD2) Kenngrößen des Drehzahl-Reglers (11) adaptiert werden.

2. Verfahren nach Anspruch 1, **dadurch gekennzeichnet, dass** bei einer Frequenz (fR) größer als der erste Grenzwert (GW1) der erste Modus (MOD1) gesetzt wird und bei einer Frequenz (fR) kleiner als der erste Grenzwert (GW1) der zweite Modus (MOD2) gesetzt wird.

3. Verfahren nach Anspruch 2, **dadurch gekennzeichnet, dass** mit Setzen des ersten Modus (MOD1) das Filter (13) umgeschaltet wird indem im Filteralgorithmus neue Parameter (Phi) verwendet werden.

4. Verfahren nach Anspruch 3, **dadurch gekennzeichnet, dass** das Filter (13) als Mittelwert-Filter ausgeführt wird und bei Umschaltung als neuer Parameter ein neuer Kurbelwellen-Winkel (Phi) gesetzt wird.

5. Verfahren nach Anspruch 4, **dadurch gekennzeichnet, dass** der neue Kurbelwellenwinkel (Phi) über eine Kennlinie (KL) bestimmt wird (KL=f(fR, Phi)).

6. Verfahren nach einem der Ansprüche 1 bis 5, **dadurch gekennzeichnet, dass** im ersten Modus (MOD1) zusätzlich ein D-Anteil des Drehzahl-Reglers (11) reduziert wird.

7. Verfahren nach Anspruch 6, **dadurch gekennzeichnet, dass** der D-Anteil über eine Vorhaltzeit (TV) und/oder einem Proportionalbeiwert (kp) reduziert wird.

8. Verfahren nach einem der vorausgegangenen Ansprüche, **dadurch gekennzeichnet, dass** im ersten Modus (MOD1) zusätzlich ein P-Anteil des Drehzahl-Reglers (11) reduziert wird.

9. Verfahren nach Anspruch 8, **dadurch gekennzeichnet, dass** der P-Anteil über einen Proportionalbeiwert (kp) reduziert wird.

10. Verfahren nach Anspruch 1 oder 2, **dadurch gekennzeichnet, dass** mit . Setzen des zweiten Modus (MOD2) die Frequenz (fR) mit einem zweiten Grenzwert (GW2) verglichen wird und bei einer Frequenz (fR) kleiner dem zweiten Grenzwert (GW2) als Kenngrößen des Drehzahl-Reglers (11) ein P- und I-Anteil adaptiert werden.

11. Verfahren nach Anspruch 10, **dadurch gekennzeichnet, dass** der P-Anteil adaptiert wird, indem einen Proportionalbeiwert (kp) bis auf einen Grenzwert (kpMIN) verringert wird.

12. Verfahren nach Anspruch 10, **dadurch gekennzeichnet, dass** der 1-Anteil adaptiert wird, indem eine Nachstellzeit (TN) bis auf einen Grenzwert (TNMAX) erhöht wird.

13. Verfahren nach den Ansprüchen 10 bis 12, **dadurch gekennzeichnet, dass** die Reihenfolge der Adaption in Abhängigkeit des Generator-Trägheitsmoments erfolgt.

14. Verfahren nach den Ansprüchen 10 bis 13, **dadurch gekennzeichnet, dass** im zweiten Modus (MOD2) nach erfolgloser Adaption der Proportionalbeiwert (kp) und/oder die Nachstellzeit (TN) auf die Startwerte (kpSTART, TNSTART) vor der Adaption gesetzt werden.

15. Verfahren nach einem der Ansprüche 1 bis 14, **dadurch gekennzeichnet, dass** ein Diagnoseeintrag und eine Abschalten der Brennkraftmaschinen-Generator-Einheit (1) erfolgt, wenn im ersten Modus (MOD1) oder zweiten Modus (MOD2) unverändert Drehzahl-Schwingungen festgestellt werden.

**Claims**

1. Method for controlling an internal combustion engine/generator unit in which the rotational speed of the internal combustion engine is controlled in a control circuit by acquiring the actual rotational speed of the internal combustion engine as a controlled variable, converting this into a filtered rotational speed by means of a filter and forming a control error for influencing a rotational speed controller from the filtered rotational speed and a set rotational speed, **characterized in that** the filtered rotational speed (nMOT, nMOT(F)) is monitored for fluctuations in rotational speed and when a fluctuation in the rotational speed is detected it is eliminated by comparing its frequency (fR) with a first limiting value (GW1) and a first mode (MOD1) or second mode (MOD2) is set as a function of the comparison, the filter (13) being switched over in the first mode (MOD1) and characteristic variables of the rotational speed controller (11) being adapted in the second mode (MOD2).

**2.** Method according to Claim 1, **characterized in that** in the case of a frequency (fR) which is higher than the first limiting value (GW1), the first mode (MOD1) is set and in the case of a frequency (fR) which is lower than the first limiting value (GW1) the second mode (MOD2) is set.

**3.** Method according to Claim 2, **characterized in that** when the first mode (MOD1) is set, the filter (13) is switched over by using new parameters (Phi) in the filter algorithm.

**4.** Method according to Claim 3, **characterized in that** the filter (13) is embodied as a mean value filter and a new crankshaft angle (Phi) is set as a new parameter when the switching over occurs.

**5.** Method according to Claim 4, **characterized in that** the new crankshaft angle (Phi) is determined (KL = f(fR, Phi)) by means of a characteristic curve (KL).

**6.** Method according to one of Claims 1 to 5, **characterized in that** in the first mode (MOD1) a D component of the rotational speed controller (11) is additionally reduced.

**7.** Method according to Claim 6, **characterized in that** the D component is reduced over a derivative action time (TV) and/or a proportional coefficient (kp).

**8.** Method according to one of the preceding claims, **characterized in that** in the first mode (MOD1), a P component of the rotational speed controller (11) is additionally reduced.

**9.** Method according to Claim 8, **characterized in that** the P component is reduced by means of a proportional coefficient (kp).

**10.** Method according to Claim 1 or 2, **characterized in that** when the second mode (MOD2) is set the frequency (fR) is compared with a second limiting value (GW2), and in the case of a frequency (fR) which is lower than the second limiting value (GW2) a P component and I component are adapted as characteristic variables of the rotational speed controller (11).

**11.** Method according to Claim 10, **characterized in that** the P component is adapted by reducing a proportional coefficient (kp) to a limiting value (kpMIN).

**12.** Method according to Claim 10, **characterized in that** the I component is adapted by increasing an adjustment time (TN) to a limiting value (TNMAX).

**13.** Method according to Claims 10 to 12, **characterized in that** the sequence of the adaptation is determined as a function of the moment of inertia of the generator.

**14.** Method according to Claims 10 to 13, **characterized in that** in the second mode (MOD2), after adaptation has been unsuccessful the proportional coefficient (kp) and/or the adjustment time (TN) are set to the starting values (kpSTART, TNSTART) before the adaptation.

**15.** Method according to one of Claims 1 to 14, **characterized in that** a diagnostic entry is made and the internal combustion engine/generator unit (1) is switched off if fluctuations in the rotational speed are detected unchanged in the first mode (MOD1) or second mode (MOD2).

**Revendications**

**1.** Procédé de régulation d'une unité moteur à combustion interne-générateur, selon lequel la vitesse de rotation du moteur à combustion interne est régulée dans un circuit de régulation par le fait qu'on détecte la vitesse de rotation réelle du moteur à combustion interne comme variable réglée, qu'elle est transformée au moyen d'un filtre en une vitesse de rotation filtrée et qu'on forme à partir de la vitesse de rotation filtrée et d'une vitesse de rotation de consigne un écart de régulation pour agir sur un régulateur de vitesse de rotation, **caractérisé en ce qu'**on surveille les oscillations de la vitesse de rotation filtrée (nMOT, nMOT(F)) et, en cas de constatation d'une oscillation de la vitesse de rotation, cette oscillation est éliminée par le fait que sa fréquence (fR) est comparée à une première valeur limite (GW1) et qu'on pose en fonction de la comparaison un premier mode (MOD1) ou un deuxième mode (MOD2), sachant que, dans le premier mode (MOD1), on modifie le filtre (13) et que, dans le deuxième mode (MOD2), on adapte des paramètres du régulateur (11) de vitesse de rotation.

**2.** Procédé selon la revendication 1, **caractérisé en ce qu'**on pose le premier mode (MOD1) pour une fréquence (fR) supérieure à la première valeur limite (GW1) et on pose le deuxième mode (MOD2) pour une fréquence (fR) inférieure à la première valeur limite (GW1).

**3.** Procédé selon la revendication 2, **caractérisé en ce que**, lorsque le premier mode (MOD1) est posé, le filtre (13) est modifié en utilisant de nouveaux paramètres (phi) dans l'algorithme de filtrage.

**4.** Procédé selon la revendication 3, **caractérisé en ce que** le filtre (13) est conçu comme filtre à valeur moyenne, et on pose lors de la modification un nouvel angle de vilebrequin (phi) comme nouveau paramètre.

**5.** Procédé selon la revendication 4, **caractérisé en ce que** le nouvel angle de vilebrequin (phi) est déterminé au moyen d'une courbe caractéristique (KL) (KL = f(fR, phi)).

**6.** Procédé selon l'une quelconque des revendications 1 à 5, **caractérisé en ce que**, dans le premier mode (MOD1), on réduit en outre une part différentielle du régulateur (11) de vitesse de rotation.

**7.** Procédé selon la revendication 6, **caractérisé en ce que** la part différentielle est réduite au moyen d'un temps d'action dérivée (TV) et/ou d'un coefficient proportionnel (kp).

**8.** Procédé selon l'une quelconque des revendications précédentes, **caractérisé en ce que**, dans le premier mode (MOD1), on réduit en outre une part proportionnelle du régulateur (11) de vitesse de rotation.

**9.** Procédé selon la revendication 8, **caractérisé en ce que** la part proportionnelle est réduite au moyen d'un coefficient proportionnel (kp).

**10.** Procédé selon la revendication 1 ou 2, **caractérisé en ce que**, lorsque le deuxième mode (MOD2) est posé, la fréquence (fR) est comparée à une deuxième valeur limite (GW2) et, pour une fréquence (fR) inférieure à la deuxième valeur limite (GW2), on adapte comme paramètres du régulateur (11) de vitesse de rotation une part proportionnelle et une part d'intégration.

**11.** Procédé selon la revendication 10, **caractérisé en ce que** la part proportionnelle est adaptée par le fait qu'un coefficient proportionnel (kp) est abaissé jusqu'à une valeur limite (kpMIN).

**12.** Procédé selon la revendication 10, **caractérisé en ce que** la part d'intégration est adaptée par le fait qu'un temps de compensation (TN) est augmenté jusqu'à une valeur limite (TNMAX).

**13.** Procédé selon les revendications 10 à 12, **caractérisé en ce que** la séquence d'adaptation s'effectue en fonction du moment d'inertie du générateur.

**14.** Procédé selon les revendications 10 à 13, **caractérisé en ce que**, dans le deuxième mode (MOD2), à la suite d'une adaptation sans succès, on pose le coefficient proportionnel (kp) et/ou le temps de compensation (TN) aux valeurs initiales (kpSTART, TNSTART) avant l'adaptation.

**15.** Procédé selon l'une quelconque des revendications 1 à 14, **caractérisé en ce qu'**on effectue une entrée de diagnostic et un arrêt de l'unité (1) moteur à combustion interne-générateur si, dans le premier mode (MOD1) ou dans le deuxième mode (MOD2), on constate des oscillations inchangées de la vitesse de rotation.

**Fig. 1**

Fig. 2

Fig. 6

nMOT(SL)    +    dR

**Regler** 11

ve

**Regelstrecke** 12

nMOT(IST)

−

A    nMOT

**Filter** 13

B

Phi

**Fig. 3**

A

nMOT

14

**Frequenz messen**

fR

Phi

15

**Filterwinkel aus KL**

**Fig. 4**

B

Phi

14

**Frequenz messen**

fR

15

**Filterwinkel aus KL**

nMOT(F)

**Filter** 16

nMOT(IST)

**Fig. 5**

Fig. 7

**Fig. 8**

**Fig. 9**

**Fig. 10**

```
              ┌─────────────────────┐
              │       MOD 1         │
              │ UP Filterumschaltung│
              └─────────────────────┘
                         │
        nein        ◇ S1
      ◄─────────── i = 0
      │              │ ja
      │         S2 ◇           nein      ┌──────────────┐ S5
      │          kp=kpMIN ───────────────│ kp = kp - dkp│
      │              │ ja               └──────────────┘
  S9 ┌──────────┐  S3 ┌──────────────┐          │
     │Diagnose-  │    │Filterumschalt.│    S6 ◇          nein
     │eintrag    │    │- neues Phi KL │    kp<kpMIN ─────────┐
     │Drehzahl-  │    │- Berechnen    │          │ ja        │
     │Schwingung │    │  nMOT m.Phi   │   S7 ┌──────────┐    │
     │hoher Freq.│    └──────────────┘     │ kp = kpMIN│    │
     └──────────┘        │ S4 ┌─────┐     └──────────┘    │
  S10┌──────────┐        │    │ i=1 │         │           │
     │ BKM AUS  │        └────└─────┘─────────┤◄──────────┘
     └──────────┘                             │
          │                              S8┌──────────┐
       ( Ende )                            │Rücksprung│
                                           └──────────┘
```

**Fig. 11**

MOD 1
UP Filterumschaltung

ja ──── S1
i = 0

nein

S2 ─── kp=kpMIN ─── nein ──── S3
Verringern kp,
Begrenzen kp

ja

S5 ─── TV = 0 ─── nein ── S6
Verringern TV,
Begrenzen TV

ja

S9
Diagnoseeintrag
Drehzahl-Schwingung
hoher Frequenz

Filterumschaltung
- neues Phi aus KL ── S7
- Berechnen nMOT
  mit neuem Phi

S10
BKM AUS

i = 1 ── S8

Ende

S4
Rücksprung

EP 1 504 521 B1

**Fig. 12**

17